# EUROPEAN PATENT APPLICATION

(11) **EP 4 818 962 A1**
(43) Date of publication of application: **07.10.2026**
(21) Application number: 25168452.8
(22) Date of filing: 04.04.2025
(51) Int. Cl.: G06F 40/253, G06F 40/30, G06F 40/35, G06F 40/56

(54) **ADVANCED COMMUNICATION SYSTEM AND METHOD**

(71) Applicant: Koninklijke Philips N.V., 5656 AE Eindhoven (NL)
(72) Inventor: VAN HALTEREN, Aart Tijmen, Eindhoven (NL); LACROIX, Joyca Petra Wilma, Eindhoven (NL)
(74) Representative: Philips Intellectual Property & Standards

(57) **Abstract**

A system (100) and method (300) are disclosed for providing a style tailored response to a user. The system includes a processor (104), a memory (106), a style tailoring interceptor module (122) for analyzing (310), via the processor (104), an inquiry from a user to determine a style profile associated with the user and generating (330) an enhanced prompt by incorporating the style profile into a prompt, and an artificial intelligence (AI) model (128) for defining style-tailoring requirements for a response to the user based on the enhanced prompt, wherein the AI model (128) uses the processor (104) to determine and transmit (335) a style-tailored response to the user from the based on the enhanced prompt.

## Description

### FIELD OF THE INVENTION

The present disclosure relates to artificial intelligence (AI)-driven communication systems, and more particularly to AI-driven communication and support systems such as chatbots.

### BACKGROUND

Support call centers are overloaded with long wait times often requiring callbacks to customers. Some call centers answer more than a million phone calls annually. To address overloaded queues of customer inquiries, call centers and digital communication platforms frequently employ chatbot systems to answer customers or others about inquiries. It is noted that while customers are exemplified as a large demographic of users that require support from companies, others can also be affected such as for example field service engineers of the company. Such chatbot systems typically provide factual responses to customers. For example, some companies use chatbots with a knowledge base. The knowledge base contains product information, instructions for use and troubleshooting guides. The chatbot uses the knowledge base to generate answers to patient questions, using a well-known technique called Retrieval Augmented Generation (RAG). However, customers have different cognitive and information processing abilities as well as emotions when they interact with and receive information from such chatbots. For some customers, the conversation with the chatbot can be confusing or emotionally unpleasant, especially since the customer is likely facing a problem that is causing them anxiety. For this reason, customers are often unhappy with the chatbot conversation and often avoid chatbots in future inquiries, thereby further burdening call center human resources. Most customers do not know how to convey information processing preferences, learning style, and cognitive capabilities to improve communication between the customer and the chatbot. Therefore, there is a need to learn information processing preferences, learning style, and cognitive capabilities of a customer, and provide customer service to the customer in a way that aligns with that customer's information processing preferences, learning style, and cognitive capabilities. A more effective generative AI (GenAI) solution will result in a more efficient use of call center resources and reduces the load on the human agents in the call center.

### SUMMARY

According to a representative embodiment, a system and method is disclosed for providing a style tailored response to a communicator. The system includes a processor, a memory, a style tailoring interceptor module for analyzing, via the processor, an inquiry from a user to determine a style profile associated with the user and generating an enhanced prompt by incorporating the style profile into a prompt, and an artificial intelligence (AI) model for defining style-tailoring requirements for a response to the user based on the enhanced prompt, wherein the AI model uses the processor to determine and transmit a style-tailored response to the user from the based on the enhanced prompt.

According to a representative embodiment, a method is disclosed for providing a style tailored response to a user comprising the processor-executed steps of, receiving an inquiry from a user, analyzing the inquiry to determine a style profile associated with the user, generating an enhanced prompt by incorporating the style profile into a prompt for an artificial intelligence (AI) model to define style-tailoring requirements for a response to the user, transmitting the enhanced prompt to the AI model (128), transmitting a style-tailored response to the user from the AI model based on the enhanced prompt.

According to another representative embodiment, the style profile is based on a style preference vector and comprises one or more style tailoring dimensions.

According to another representative embodiment, the style preference vector is updated after each interaction with a user in a continuing conversation by adding or subtracting style tailoring dimensions extracted from the continuing conversation.

According to another representative embodiment, the system and method are disclosed wherein a style preference scoring function (124) is configured to prompt the AI model to score style tailoring dimension candidates based on the inquiry for updating the style profile.

According to another representative embodiment, the system and method are disclosed wherein the AI model is used by an AI chatbot.

According to another representative embodiment, the system and method are disclosed wherein the AI model (128) is a large language model (LLM), a machine learning model, or a machine learning classifier.

According to another representative embodiment, the system and method are disclosed, wherein the style preference vectors are organized in a multi-dimensional vector space.

According to another representative embodiment, the system and method are disclosed, wherein the inquiry is analyzed for linguistic and structural style indicators by a natural language processing module.

According to another representative embodiment, the system and method are disclosed, wherein the style tailoring interceptor module (122) or the AI model (128) are stored and accessed from a mobile device or a software-as-a-service (SaaS).

According to a representative embodiment, a non-transitory medium includes computer-readable instructions that when executed by a processor, cause the processor to carry out steps of receiving an inquiry from a user, analyzing the inquiry to determine a style profile associated with the user, generating an enhanced prompt by incorporating the style profile into a prompt for an artificial intelligence (AI) model to define style-tailoring requirements for a response to the user, transmitting the enhanced prompt to the AI model, transmitting a style-tailored response to the user from the AI model based on the enhanced prompt.

### BRIEF DESCRIPTION OF THE DRAWINGS

The example embodiments are best understood from the following detailed description when read with the accompanying drawing Figures. It is emphasized that the various features are not necessarily drawn to scale. In fact, the dimensions may be arbitrarily increased or decreased for clarity of discussion. Wherever applicable and practical like reference numerals refer to like elements.
Fig. 1A is a simplified block diagram of a communication system, according to a representative embodiment.
Fig. 1B is a simplified block diagram of a memory containing a variety of modules, according to the representative embodiment in Fig. 1A.
Fig. 1C is a simplified block diagram of a memory containing an alternative variety of modules, according to an alternative representative embodiment.
Fig. 2 is a visual representation of the multi-dimensional style preference vectors, according to a representative embodiment.
Fig. 3A shows a flow diagram of a method 300, according to a representative embodiment.
Fig. 3B shows an overview of method 300 with illustrated modules, according to a representative embodiment.
Fig. 3C shows an overview of an alternative to method 300 with illustrated modules, according to a representative embodiment.
Fig. 4A shows a flow diagram of a method 400A, according to a representative embodiment.
Fig. 4B shows a flow diagram of an alternative method 400B, according to a representative embodiment.
Fig. 4C shows a flow diagram of an alternative method 400C, according to a representative embodiment.
Fig. 4D shows an illustration of conversation, according to a representative embodiment.
Fig. 5A shows a simplified block diagram of a communication system, according to a representative embodiment.
Fig. 5B is a simplified block diagram of a memory containing a variety of modules, according to a representative embodiment in Fig. 5A.
Fig. 6A shows a simplified block diagram of a communication system, according to a representative embodiment.
Fig. 6B is a simplified block diagram of a memory containing a variety of modules, according to a representative embodiment in Fig. 6A.

### DETAILED DESCRIPTION OF EMBODIMENTS

Any of the information steps below can be performed by information stored in a computer-readable medium or data carrier system configured to carry out any of the steps described. The computer-readable medium or data carrier system can include a set of software instructions that can be executed by a processor to cause the device to perform any of the methods or processor-based functions disclosed herein.

In the following detailed description, for the purposes of explanation and not limitation, representative embodiments disclosing specific details are set forth in order to provide a thorough understanding of an embodiment according to the present teachings. Descriptions of known systems, devices, materials, methods of operation and methods of manufacture may be omitted so as to avoid obscuring the description of the representative embodiments. Nonetheless, systems, devices, materials and methods that are within the purview of one of ordinary skill in the art are within the scope of the present teachings and may be used in accordance with the representative embodiments. It is to be understood that the terminology used herein is for purposes of describing particular embodiments only and is not intended to be limiting. The defined terms are in addition to the technical and scientific meanings of the defined terms as commonly understood and accepted in the technical field of the present teachings.

It will be understood that, although the terms first, second, third, etc. may be used herein to describe various elements or components, these elements or components should not be limited by these terms. These terms are only used to distinguish one element or component from another element or component. Thus, a first element or component discussed below could be termed a second element or component without departing from the teachings of the inventive concept.

The terminology used herein is for purposes of describing particular embodiments only and is not intended to be limiting. As used in the specification and appended claims, the singular forms of terms "a," "an" and "the" are intended to include both singular and plural forms, unless the context clearly dictates otherwise. Additionally, the terms "comprises," "comprising," and/or similar terms specify the presence of stated features, elements, and/or components, but do not preclude the presence or addition of one or more other features, elements, components, and/or groups thereof. As used herein, the term "and/or" includes any and all combinations of one or more of the associated listed items.

Unless otherwise noted, when an element or component is said to be "connected to," "coupled to," or "adjacent to" another element or component, it will be understood that the element or component can be directly connected or coupled to the other element or component, or intervening elements or components may be present. That is, these and similar terms encompass cases where one or more intermediate elements or components may be employed to connect two elements or components. However, when an element or component is said to be "directly connected" to another element or component, this encompasses only cases where the two elements or components are connected to each other without any intermediate or intervening elements or components.

The present disclosure, through one or more of its various aspects, embodiments and/or specific features or sub-components, is thus intended to bring out one or more of the advantages as specifically noted below. For purposes of explanation and not limitation, example embodiments disclosing specific details are set forth in order to provide a thorough understanding of an embodiment according to the present teachings. However, other embodiments consistent with the present disclosure that depart from specific details disclosed herein remain within the scope of the appended claims. Moreover, descriptions of well-known apparatuses and methods may be omitted so as to not obscure the description of the example embodiments. Such methods and apparatuses are within the scope of the present disclosure.

It is appreciated that chatbots exist, but even with the existence of millions of such chatbots to address all customers, such chatbots are ineffective and useless without more. Also, it is appreciated that the goal of chatbots is to replace human beings by artificially providing a larger support base for customers to avoid tying up phone lines and customers in long queues. Therefore, such chatbots must function in way that is pleasing to human customers, something that is often not optimally achieved by human agents in call centers. Notably, while most human agents are taught to be friendly based on the old idiom "service with a smile", they do not know how to assess the best way to communicate with a customer based on the customer's information processing preferences, learning style, cognitive capabilities, psychological profile, and stylistic preferences. It is noted that it is impossible for a human being to learn the customer's information processing preferences, learning style, cognitive capabilities, psychological profile, and stylistic preferences and apply or process the aforementioned information based on the solution(s) described in the present disclosure based on the large number of permutations associated with a person's information processing preferences, learning style, cognitive capabilities, psychological profile, and stylistic preferences, as well as the challenges of obtaining all of that information in conversation and providing corresponding stylistic tailored responses. Even if every human agent were trained to be a psychologist, it would be impossible to learn the customer's information processing preferences, learning style, and cognitive capabilities, and psychological profile, and stylistic preferences and apply or process the aforementioned information based on the solution(s) described in the present disclosure) in sufficient time to resolve the customer's problem(s). Therefore, the present disclosure is aimed at least at improving chatbot systems, chatbot communications, and the technical field of chatbot support with new and improved AI communication system features that have never been performed by humans, AI chatbots, or any kind of AI systems or computer systems for that matter. Such improvements in AI communication systems result in an unparalleled improvement to one or more multiple aspects exemplified in the following Table 1.

**Table 1: Improved aspects or results from technical improvements of the present disclosure**

| **Aspects improved** | **Rationale** |
|---|---|
| Improved patient experience | increasing the likelihood that the patient can process the response |
| Improved staff experience | A better-informed patient will reduce the load on health care staff, and on the call center staff |
| Better health outcomes | A better understanding by the patient as to how to properly use medical devices or treatment regimens will lead to a better health outcome. |
| Lower cost of care | There is a significant cost benefit to avoid a patient calling our operators. This could be translated in an overall lower cost of the services a medical device business provides |
| Customer need | Patient Engagement |
| Technical solution domain | Patient Engagement |

Moreover, while the present disclosure is directed to general customer support, it could also be directed medical device customer support, wherein time is of the essence. For example, as one present medical field application, the present AI communication system can be used to support home cardiac telemetry for patients with arrhythmias that need time-critical diagnosis. Therefore, in such medical device use cases, the AI communication system becomes essential since a human being cannot perform the presently disclosed solutions in sufficient time to address medically critical arrhythmias, where time is of the essence in diagnosis. It is appreciated that by training AI communication systems with AI models (AI chatbots and similar types of AI communication systems) to learn a style preference profile of a customer or user in real-time through dynamic updates that are incrementally made as a conversation continues between the AI communication system and the customer.

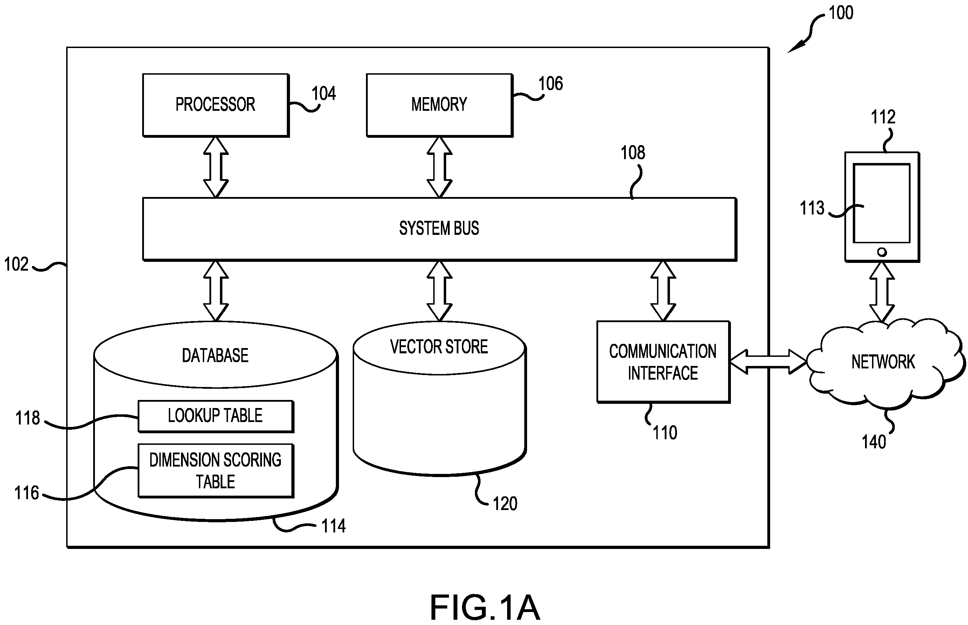

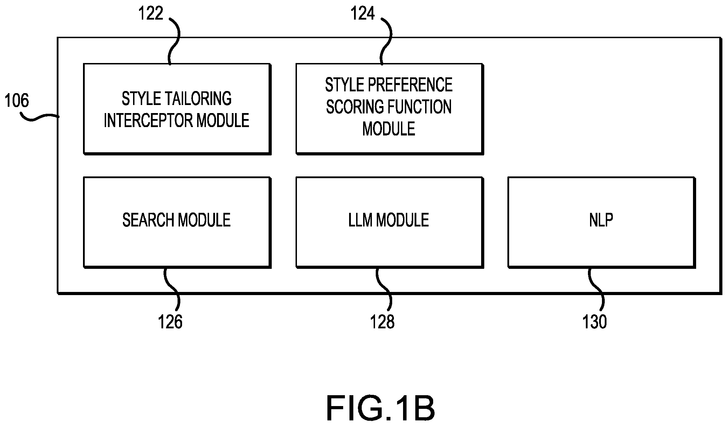

In representative embodiment shown in Fig. 1A, the system 100 includes a server 102, comprising a processor 104 for coordinating communications between system components and processing one or more of instructions and data stored in memory, a memory 106 for storing instructions to carry out the functions of the present disclosure when executed by the processor 104, a system bus 108 serving to connect a plurality of the components of the server so that the components are in communication, a communication interface 110 for facilitating communication between the server 102 and a client device 112, database 114, vector store 120. Database 114 and vector store 120 may be stored on hard drive or other common memory device, the nature of which is not critical. As shown in Fig, 1B, server 102 further includes a set of instructions stored in memory 106, including a style tailoring interceptor module 122, a style preference scoring function module 124, a search module 126, and an LLM module 128 (e.g., for use by a chatbot) configured to communicate with a user (e.g., a customer, inquirer, or someone who is need of help, support, or communication, or someone else using or participating in the system, e.g., to learn about a new product or service for which they are not yet a customer) at the client 112 over a network 140 to tailor the LLM module 128 style of communication with the user in a manner that is personalized to the user's psychological profile and related communication style as will be discussed in more detail below. Client 112 is depicted as a tablet computer with a user interface 113 in the form of a touchscreen for illustrative purposes, but can be any similar device such as a mobile device, mobile smartphone with touchscreen, desktop computer with keyboard and mouse, or laptop with keyboard and trackpad. The functions of the modules 122, 124, 125, 126, and 128 will be explained in more detail in connection with the functions described in connection with the method 300 below. The term "module" simply refers to a specific instruction, or set of instructions, or one or more programs with instructions, executed by the processor 104 to perform a function, such as the one or more functions described in method 300 or otherwise described elsewhere in this disclosure. The present embodiment of system 100, its components, and/or other embodiments disclosed herein can be used by an AI chatbot or AI chatbot user interface, or can exist as part of an AI chatbot or AI chatbot user interface.

System 100 further includes a vector store 120 (database) of preloaded style preference vectors that represent and correspond to different communication style profiles, which are comprised of a blend, in various combinations, of the style tailoring dimensions provided in Table 2 below. For example, a communication style profile may be a blend of "high need for recognition", "Blunter coping style", and "Optimistic Disposition", or some other blended combination of style tailoring dimensions provided in Table 2 below. A communication style profile may also be comprised of a single style tailoring dimension (e.g., only "Pessimistic disposition"). The style tailoring dimensions are associated with the general communication style profiles "Analyst", "Sensitive", "Optimist", and "Fighter" as described in Lacroix J, Tatousek J, Den Teuling N, Visser T, Wells C, Wylie P, Rosenberg R, Bogan R, Effectiveness of an Intervention Providing Digitally Generated Personalized Feedback and Education on Adherence to Continuous Positive Airway Pressure: Randomized Controlled Trial, J Med Internet Res 2023;25:e40193, DOI: 10.2196/40193, and as provided in more detail below in Table 2. It is appreciated that a communication style profile may also be comprised of multiple (or all) style tailoring dimensions associated with general communication style profiles "Analyst", "Sensitive", "Optimist", and "Fighter".

**Table 2**

| **Profile** | **Dimension** | **Description** |
|---|---|---|
| Analyst | High need for cognition | Prefers objective information to understand their condition, i.e. facts, statistics, evidence |
| Analyst | Consideration of distant future consequences | Interested in the long-term health outcomes of their decisions. |
| Analyst | Monitor coping style | Susceptible to negative or threatening information. |
| Analyst | Prevention regulatory focus | Motivated by the prevention of negative health consequences. |
| Analyst | Internal locus of control | Feels responsible for their health and wants to be in control in managing their health. |
| Sensitive | Pessimistic disposition | Tends to anticipate negative outcomes. |
| Sensitive | Prevention regulatory focus | Motivated by the prevention of negative health consequences. |
| Sensitive | External locus of control | Believes health outcomes are determined by uncontrollable external factors (i.e. physicians, fate). Prefers low target setting. |
| Sensitive | Submissive | Is unassertive, passive, and susceptible to submissive language. |
| Optimist | Low need for cognition | Prefers personal stories and anecdotes over factual information. |
| Optimist | Consideration of immediate future consequences | Interested in the short-term health outcomes of their decisions. |
| Optimist | Blunter coping style | Tends to ignore negative or threatening information. |
| Optimist | Promotion regulatory focus | Motivated by potential gains resulting from their decisions. |
| Optimist | Internal locus of control | Feels responsible for their health and wants to be in control in managing their health. |
| Optimist | Extravert | Interested in how a medical intervention impacts their social life. |
| Fighter | Optimistic disposition | Tends to anticipate positive outcomes. |
| Fighter | Consideration of immediate future consequences | Interested in the short-term health outcomes of their decisions. |
| Fighter | Promotion regulatory focus | Motivated by potential gains resulting from their decisions. |
| Fighter | Internal locus of control | Feels responsible for their health and wants to be in control in managing their health. Open to high target setting. |
| Fighter | Dominant | Is assertive, confident, and susceptible to dominant and strong language. |

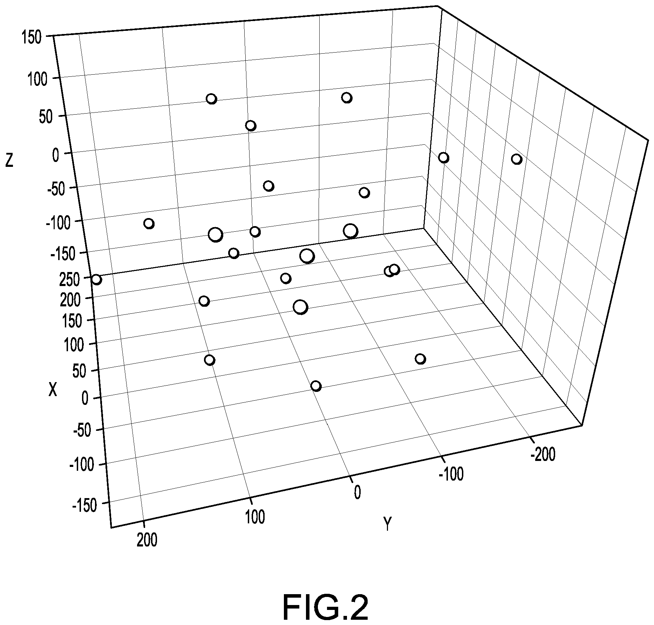

More specifically, the style preference vector of the present disclosure is a numerical representation of a communication style profile. A vector consists of multiple numerical values, where each numerical value corresponds to a different style dimension (e.g., *Need for Cognition, Sensitivity, Consideration of Future Consequences*) of the style preference profile. Thus, each style preference vector is made up of a varying combination of values corresponding to different style dimensions. Instead of describing a person's communication style in words, it is quantified using a mathematical representation or vector. The 3D vector space in Fig. 2 is an exemplary visual representation of the multi-dimensional style preference vectors stored in vector store 120. This exemplary 3D vector space is shown with only three different dimensions x, y, and z coordinate axes; however, it is understood that such a vector space can be created with significantly more dimensions (e.g., 1500) which can only be processed by an AI/LLM. In general, each dot is a vector that represents a specific communication style positioned in the multi-dimensional space based on its unique combination of numerical values. Each of the gray dots represents a communication style profile with only a single style tailoring dimension being relevant such that if each dimension of the communication style profile is required to meet a minimum threshold (e.g., 60%) of likelihood that it is at least partly representative of language or communication style, only a single dimension of the combination of dimensions would meet the threshold. Each large dot in Fig. 2 represents a style preference vector that is directed to one of the communication style profiles "Analyst", "Sensitive", "Optimist", and "Fighter" previously mentioned.

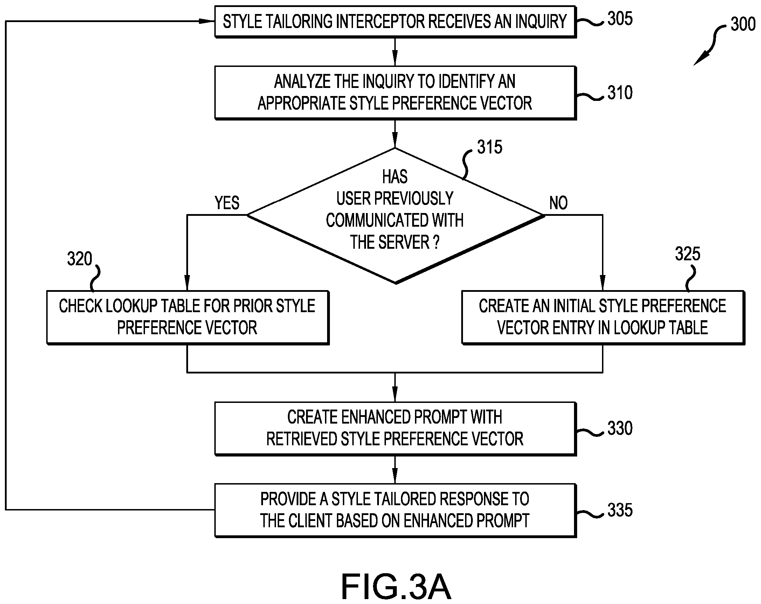

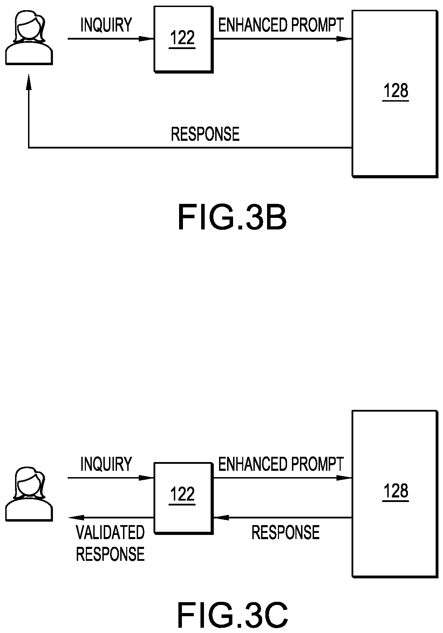

Fig. 3A shows a method 300 according to at least one embodiment of the present disclosure. Fig. 3B shows an illustrated overview of method 300 with style tailoring interceptor module 122 and LLM module 128. In step 305, the client 112 transmits an inquiry (e.g., a single question, a plurality of questions, a statement, or a question including additional context such as background information about a potential issue) to the server 102 via the network 140 and communication interface 110. Client 112 transmits such an inquiry through its built-in user interface (e.g., keyboard, mouse, gestures, user interface 113, touchscreen, etc.) and software such as videoconferencing software or website-enabled software with fields for providing input. In step 310, processor 104 executes style tailoring interceptor module 122 from memory 106, which analyzes the inquiry in one of several ways to identify an appropriate style preference vector for use in creating an enhanced prompt for the LLM module 128 so that the LLM module 128 can respond in the most optimal way tailored to the psychological profile and communication style of the inquiry source.

In one representative embodiment for identifying an appropriate style preference vector, style tailoring interceptor module 122 determines whether a user at the client 112 has previously communicated with the server 102 or a related system in a decision step 315. By way of example, the user at the client 112 is identified through an authentication, login, or other identification and the style tailoring interceptor module 122 can check a database of current users based on the identification. If the style tailoring interceptor module 122 determines that the user at the client 112 has previously communicated with the server 102 or a related system, style tailoring interceptor module 122 checks lookup table 118, stored in database 114, for a prior style preference vector entry associated with the current user at the client 112 in step 320. Alternately, style tailoring interceptor module 122 can check for a record of the user in the lookup table 118 to inferentially determine if the user at the client 112 has previously communicated with the server 102 or a related system. If there is no history of the user via a user database or via entries in the lookup table 118, the style tailoring interceptor module 122 can create an initial style preference vector entry in the lookup table 118 with a predefined, default, or generic vector as a starting point in step 325.

In another alternative embodiment, one method for creating an initial style preference vector entry is by identifying an appropriate style preference vector, wherein the new user inquiry can be analyzed for linguistic and structural style indicators to determine an initial style preference vector for a new user. Linguistic indicators are specific words, phrases, and lexical choices that provide insight into how a user expresses themselves, structures their questions, and frames their communication preferences. Some linguistic indicator examples include word choice, sentence length, use of modifiers, and emotional expressions. These indicators help determine tone, intent, emotional engagement, and level of detail in user input. Structural indicators refer to sentence structure, complexity, and grammatical composition that can provide insight into a user's preferred communication style.

To analyze a question for linguistic and structural style indicators, memory 106 contains an NLP module 125. In one embodiment, NLP module 125 can be an LLM. The style tailoring interceptor module 122 defines specific style indicators that correlate with communication preferences. A table of exemplary linguistic and structural indicators is provided below in Table 3.

**Table 3**

| Inquiry | Linguistic Indicator | Structural Indicator | Style Tailoring Dimension |
|---|---|---|---|
| "Can you explain in detail how this works and what might happen if I ignore it?" | Requests detailed, logical explanations | Uses complex sentence structures, multiple clauses, and logical connectors | Need for Cognition (High) |
| "Will this affect my health in the future?" | Concerned about long-term effects | Uses conditional clauses (if-then statements) and modal verbs (e.g., might, could, should) | Consideration of Future Consequences (High) |
| "I'm really worried about this." | Uses emotional, empathetic language | Uses first-person pronouns and emotion words | Sensitivity (High) |

NLP module 125 extracts the linguistic and structural indicators and uses NLP techniques such as Part-of-Speech tagging, sentence complexity, sentiment analysis, and other known methods to heuristically analyze the linguistic and structural indicators as exemplified above in Table 3 above to determine high probability style tailoring dimension candidates.

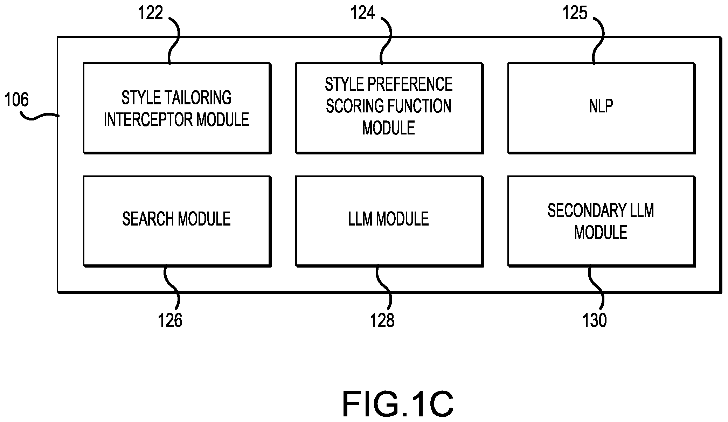

In another alternative embodiment to identify an appropriate style preference vector with respect to an inquiry, the LLM module 128 can be prompted by the style preference scoring function module 124 (by way of example, controlled or caused by style tailoring interceptor module 122) to provide a score for a number of style tailoring dimensions in the following manner. An example prompt could be: "Analyze if the user in the given inquiry demonstrates a high need for cognition and give a score between 0-100. Inquiry: {insert inquiry}". Another prompt that analyses the same inquiry but for a different dimension could be: "Analyze if the user in the given conversation tends to anticipate negative outcomes and give a score between 0-100. Inquiry: {insert inquiry}". The LLM module 128 (or optionally another secondary LLM 130 as shown in Fig. 1C) determines scores for a variety of style tailoring dimensions based on linguistic context and patterns. LLMs process language using statistical patterns and semantic relationships from massive datasets. For example, the LLM module 128 analyzes linguistic cues in the inquiry, e.g., sentence complexity, phrasing, verb choices, and modifiers (e.g., "explain in detail" vs. "just tell me"). Since the LLM has been pre-trained on vast text corpora, it recognizes patterns associated with analytical versus simple requests and infers a numerical score. The LLM module 128 responds to the exemplary prompt above (in regard to the high need for cognition style tailoring dimension) may be "Score: 85; Explanation: The user explicitly requests a detailed explanation ("explain all possible causes in detail"), which suggests a high preference for complex reasoning or high need for cognition. Based on the response from the LLM module 128, the style preference scoring function module 124 assigns a score of 85% for High Need for Cognition to the dimension scoring table 116. A plurality of other style tailoring dimensions are scored and evaluated against a predetermined threshold, as illustrated hypothetically in the dimension scoring table 116 exemplified in Table 4 below. The data in the Table 4 below is saved in database 114.

**Table 4: Exemplary Dimension Scoring Table**

| User ID | Style Tailoring Dimension | Score |
|---|---|---|
| 1 | High Need for Cognition | 85% |
| 1 | Consideration of distant future consequences | 1% |
| 1 | Monitor coping style | 75% |
| 1 | Prevention Regulatory Focus | 15% |

The search module 126 searches the vector store 120 to find a style preference vector that most closely matches the combination of style tailoring dimensions that have a score above a predefined threshold (e.g., 60%). In this example, only the style tailoring dimensions "Monitor coping style" and "High Need for Cognition" both have a score above 60% and are both therefore used in searching for a style preference vector in the vector store 120. The blend of both "Monitor coping style" and "High Need for Cognition" is plotted as a point in the 3D vector space, representing a vector that is a blend of the two style tailoring dimensions. The search module 126 finds the closest style preference vector to the plotted point in the 3D vector space, and records the coordinate location of the plotted point in the lookup table 118 as representing the most recent and updated style preference vector applicable to the user. An example of lookup table 118 containing the most recent and updated recorded style preference vectors is provided below in Table 5. Table 5 lists arbitrary numbers which are not necessarily linked to any of the examples of specific style preference vectors described herein, but is merely an illustration of how such a lookup table 118 may be formatted and what the coordinates may look like.

**Table 5: Exemplary Lookup Table of stored style preference vectors**

| **User Id** | **Style Preference Embedding** |
|---|---|
| 1 | [ 19.06624194 -10.28258735 -41.03093029 - 34.93452959 -5.63351819 -4.79015333 5.3552881 15.91936674 -7.19428355 -41.33972686 -22.0844756 13.95650854 23.21738726 -17.34044019 25.41305337 - 48.27675811 24.4096093 -0.46903432 -0.26314863 45.47801258 -39.53904012 37.62394192 -22.19713221 48.72467992 -47.27451392] |
| 2 | [-39.99387392 39.49833446 -35.65593396 15.46755631 40.08130682 -5.94783653 -11.49105906 - 18.06445062 -10.17276488 18.9164915 37.30438268 2.19161048 30.43894247 -1.68272668 23.42147668 40.48016869 -48.64853049 35.56135398 -42.80820896 30.24722954 26.20443502 -8.41723777 26.30924217 5.32436947 17.51040578] |
| 4 | [ -8 -26 -41 -45 -41 37 20 -9 44 -40 10 -32 -32 31 50 -42 12 45 -36 0 -7 12 36 -14 -14] |
| 16 | [ -6 -5 -4 1 -21 -6 27 -32 -11 -1 -47 16 -20 49 45 20 -32 - 21 -34 34 21 17 -30 -25 31] |
| ... | |

In another alternative embodiment to identify an appropriate style preference vector, a dedicated machine learning classifier can be used to classify user communication styles and provide scores for the user inquiry in respect of style tailoring dimensions. Instead of prompting an LLM to analyze the inquiry and provide scores for each style tailoring dimension, this simpler approach employs a pre-trained model such as a Random Forest classifier, SVM, or a lightweight deep learning network (e.g., neural network(s)), that has been trained on a dataset of historical user inquiries and their associated extracted linguistic features (inputs) labeled with corresponding style tailoring dimension scores or labels (outputs). The machine learning model learns to map the input (user inquiry features) to the output (style dimension scores or labels). When a new inquiry is received, the classifier processes the input by extracting key linguistic features (e.g., sentence complexity, phrasing, verb choices, and modifiers) and outputs numerical scores on a scale of 0 to 100 for each predefined style tailoring dimension (for example, 'High Need for Cognition' and 'Monitor Coping Style'). These predicted scores are then recorded in the dimension scoring table 116, and dimensions with scores exceeding a predetermined threshold (e.g., 60%) are used to construct a style preference vector. This style preference vector, which represents the blend of the relevant style tailoring dimensions, is visualized as a point in a simplified 3D vector space. The search module 126 then queries the vector store 120 to retrieve the preloaded style preference vector that most closely matches this point, and the resulting vector is stored in the lookup table 118 as the most recent and updated style preference vector for the user. This alternative method streamlines the process by leveraging a dedicated, simpler ML classifier for style analysis, thereby reducing computational overhead compared to prompting a full-scale LLM for each inquiry.

In another alternative embodiment to identify an appropriate style preference vector, a hybrid approach or combination of LLM and trained model is used. The LLM provides initial scores based on prompt-based reasoning. A trained ML model then refines these scores by applying a more structured, deterministic classification approach. The final score can be an average of both approaches, improving consistency and flexibility. The final score is populated into a table and the scores for all relevant style tailoring dimensions meeting a predetermined threshold are then used to search for the closest style preference vector in the vector store 120 as described above, such that the closest match is recorded in the lookup table 118. A closest style preference vector can be determined using cosine similarity or Euclidean distance by way of example.

In another alternative embodiment, an initial style preference vector entry is created by transmitting a style preference survey to the user at the client 112. The survey may request explicit data about the user's style preferences or style tailoring dimensions such as providing Table 2 with checkboxes that the user can select as relevant, or it may ask for a small set of inputs that an AI model (e.g., LLM module 128 or another dedicated classifier) can use to derive the user's optimal style tailoring dimensions and/or corresponding style preference vector. For example, the survey may present the contents of Table 2 and ask the user to identify their most relevant, top 1, top 3, or top 5 style tailoring dimensions (e.g. selecting from Table 2 options). Alternatively, the survey may include a series of questions whose responses provide input data, such as linguistic and structural features, that an AI model can process to predict the most relevant style tailoring dimensions for the user. In this embodiment, the AI model is trained on a dataset comprising training input data entries (e.g., historical user survey responses or inquiries with extracted linguistic features) and corresponding training output data entries (e.g., the desired style tailoring dimension labels or numerical scores).

During training, the AI model learns the mapping between input and output by processing each training input entry and generating a predicted output (i.e., predicted style tailoring dimension values or scores). Here, the input is the user-provided data (with features such as sentence complexity, phrasing, and verb/modifier usage), and the output is the corresponding style tailoring dimension or score. The model can be optimized by comparing its predicted outputs with ground truth labels or scores (generated by user surveys) that represent the correct style tailoring dimensions for each training input, using a loss function that quantifies the prediction error. If the error is high or if the model's confidence in its predictions falls below a specified threshold (e.g., less than 90% confidence), the model parameters are adjusted to reduce the error. This process is repeated iteratively until the error converges to an acceptable level (e.g., predictions are within ±1% of the labeled values) and the confidence threshold is met, or when additional training otherwise does not improve performance.

Once trained, the refined AI model can predict style tailoring dimensions (or corresponding scores) for new user inquiries based on their extracted linguistic features. These predictions are then recorded in the dimension scoring table 116, and dimensions with scores exceeding a predetermined threshold (e.g., 60%) are used to construct a style preference vector. The search module queries the vector store to find the preloaded style preference vector that most closely matches this constructed vector, and the resulting vector is stored in the lookup table 118 as the most recent and updated style preference vector for the user.

In step 330, the style tailoring interceptor module 122 enhances an LLM prompt by adding the retrieved style preference vector to the prompt using a placeholder ($style_preference_vector$) as an example. The enhanced prompt is for example, "You are a call center agent working answering questions from patients. Answer in maximum 5 sentences. You adapt the answer to the patient's preferences: $style_preference_vector$" The $style_preference_vector$ placeholder dynamically inserts the user's preferred communication style (by virtue of the retrieved style preference vector), which is made up of one or more style tailoring dimension components of Table 4 for example. For example, the $style_preference_vector$ will have one or more dimension components (e.g., a blend of the dimension components) that may be associated with one or more of Analyst, Sensitive, Optimist, and Fighter profiles.

The $style_preference_vector$ can be representative of a single style tailoring dimension (e.g., submissive), multiple dimensions related to the same profile (e.g., submissive, external locus of control), or some combination of dimensions associated with different profiles (e.g., high need for cognition associated with the Analyst profile and extravert associated with the Optimist profile). Thus, the prompt to the LLM module 128 will be enhanced by the $style _preference_vector$ in any one of the aforementioned combinations. For the sake of simplification, the following examples of enhancements to the LLM module 128 prompt are provided generically with regard to dimensions associated with the four profiles Analyst, Sensitive, Optimist, and Fighter. It is understood that the actual enhancement to the LLM module 128 prompt and resulting response from the LLM module 128 could be some blend or combination of the following examples.

In step 335, the LLM module 128 determines an appropriate style tailored response and provides the style tailored response to the user at the client 112 based on the enhanced prompt created with the style preference vector. If $style_preference_vector$ = [submissive, pessimistic] vector, the LLM module 128 is explicitly instructed to generate responses that are stylistically appropriate in response to an inquiry that bears sensitive style tailoring dimensions "submissive" and "pessimistic". For example, the LLM module 128 will stylistically respond to style tailoring dimensions "submissive" and "pessimistic" with empathy and reassurance, acknowledging the user's emotions, avoiding overly technical or impersonal responses and providing gentle guidance rather than forceful instructions. By way of example, the LLM module 128 produces responses that start with empathy ("*I understand you're feeling very tired, even in the morning, which must be frustrating.* "), provide generalized, non-intimidating explanations ("*Fatigue can be a complex issue, and it's not always easy to pinpoint the exact cause."*), offer reassurance ("*Try not to worry too much, although I know that can be difficult.*'), and encourage seeking professional help gently ("*To be on the safe side, I would recommend consulting with your doctor about your symptoms."*).

Taking the example from Table 4, if $style_preference_vector$ = [high need for cognition, monitor coping style] vector, the LLM module 128 is explicitly instructed to generate responses that are stylistically appropriate in response to an inquiry that bears analyst style tailoring dimensions "high need for cognition" and "monitor coping style". For example, the LLM module 128 will respond to style tailoring dimensions "high need for cognition" and "monitor coping style" with logical reasoning and structured responses, providing in-depth, fact-driven explanations, emphasizing scientific accuracy over emotional tone, and breaking down complex topics into clear, data-supported insights. By way of example, the LLM module 128 produces responses that start with a structured explanation, providing a logical breakdown of causes, emphasizing evidence-based reasoning and avoiding emotional reassurance or subjective statements, (*"Persistent fatigue, especially upon waking, can be a sign of various underlying health issues. Common causes include sleep disorders like sleep apnea, chronic conditions such as anemia or thyroid problems, or mental health concerns like depression. Additionally, lifestyle factors such as poor sleep hygiene, lack of physical activity, or an unbalanced diet may contribute to ongoing tiredness."*), and active information-seeking behavior, aligning with monitor coping style, by recommending steps to track symptoms and proactively gather relevant health data ("*It would be beneficial to monitor your sleep patterns, diet, and daily energy fluctuations using a health tracker or journal. Identifying trends in your symptoms can help healthcare professionals make a more accurate diagnosis."*).

In an alternative embodiment shown in Fig. 3C, style tailoring interceptor module 122 may check or validate the response to the user to ensure that the response is properly tailored based on the style preference vector, before the response is transmitted to the user. If the response is validated, the validated response is transmitted to the user. If for any reason the style tailoring interceptor module 122 determines that the response is inadequate or incorrect (e.g., missing information, incorrect information, missing style tailoring, or incorrect style tailoring), the style tailoring interceptor module 122 may repeat the process of creating an enhanced prompt for the LLM module 128, including requesting additional information from the user or reevaluating the inquiry or conversation.

The above-described method 300 can be repeated iteratively and continuously, with the LLM module 128 continuously updating the style preference vector for the user as the style or nature of the inquiry changes. This process can continue to loop until communication between the user through client 112 and the server 102 disconnects, the user stops replying, or similar termination of activity occurs.

Without the above, an AI communication system such as an AI chatbot would produce generic responses that do not align with the user's psychological or communication preferences. The modules, configurations, and operations described above ensure that users receive responses that makes it easier to process and more likely for the user to understand. The LLM module 128 adjusts its language and tone dynamically for different users, and the system 100 personalizes AI-generated responses for a better user experience as exemplified above.

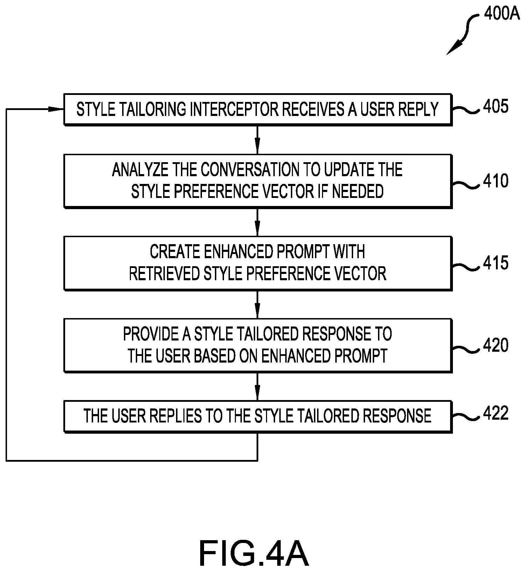

Turning to another representative embodiment, Fig. 4A shows a method 400A in the form of an iterative algorithm for continuously evaluating an ongoing conversation with a user and generating responses that are stylistically appropriate based on a continuously updated assessment of the user's communication and phycological profile from the ongoing conversation. It is appreciated that as a conversation continues between the user and the LLM module 128, the user may become frustrated if the conversation is not helpful, may become optimistic if the conversation appears helpful, or may have some other reaction. It is appreciated that as a result of the continued conversation, the user's style of communication and/or psychological profile may continuously change, or subtle aspects of the user's psychological profile may become more readily ascertained as the conversation continues. After any question-response cycle is completed (i.e., after the user poses an inquiry and LLM module 128 transmits a response to the user), the style tailoring interceptor module 122 awaits a response from the user. In step 405, after a question-response cycle is completed, the style tailoring interceptor module 122 receives a response from the user. The entire conversation (the prior question-response cycle(s)) and most current inquiry are stored in memory 106. In step 410, the style tailoring interceptor module 122 analyzes the conversation to determine an appropriate style preference vector and updates the style preference vector from prior findings if the user's communication style and/or psychological profile has changed. The style tailoring interceptor module 122 causes the style preference scoring function module 124 to evaluate the conversation against a set of predefined style tailoring dimensions as exemplified in Table 2. The style preference scoring function module 124 uses LLM module 128 (or a secondary LLM 130) to evaluate different aspects of the conversation and assign scores (0-100) for each style tailoring dimension in the following manner. The style preference scoring function module 124 sends a series of scoring prompts to the LLM module 128. The LLM module 128 assigns scores (0-100) to quantify how strongly the conversation aligns with each style tailoring dimension. These scores are stored in the dimension scoring table 116 and used to update the user's style preference vector in the lookup table 118 as described in more detail below.

Each scoring prompt follows a specific format to evaluate one style tailoring dimension at a time. By way of example, in scoring "Need for Cognition" style tailoring dimension, the style preference scoring function module 124 asks the LLM module 128 to determine how much the user prefers detailed, analytical responses based on the current conversation as a whole. For example, a scoring prompt is sent to a LLM module 128, "Analyze whether the user in the given conversation demonstrates a High Need for Cognition. Provide a score between 0-100. Conversation: {insert conversation}" If the user asks for detailed explanations, follow-up questions, or scientific reasoning, the LLM module 128 scores the conversation high for "Need for Cognition" (e.g., 78). If the user prefers short, simple answers, the LLM module 128 scores the conversation low for "Need for Cognition" (e.g., 30).

By way of another example, in scoring "Consideration of Future Consequences" style tailoring dimension, the style preference scoring function module 124 prompts the LLM module 128 to determine whether the user focuses on long-term outcomes versus immediate fixes. A scoring prompt is sent to a LLM module 128, "Analyze whether the user in the given conversation tends to anticipate future outcomes. Provide a score between 0-100. Conversation: {insert conversation}". If the user asks about long-term risks, prevention strategies, or lifestyle changes, the LLM scores the conversation high (e.g., 82). If the user asks for a quick solution to an immediate problem, the LLM scores the conversation low (e.g., 40).

Further to the example above of scoring "Consideration of Future Consequences" style tailoring dimension, the LLM module 128 responds to the exemplary prompt above with "Score: 82; Explanation: The user explicitly asks about long-term risks, prevention strategies, or lifestyle changes." Based on the response from the LLM module 128, the style preference scoring function module 124 assigns a score of 82% to the dimension scoring table 116. A plurality of other style tailoring dimensions are scored, evaluated against a predetermined threshold and stored in dimension scoring table 116. In the example below, the threshold is now met for High Need for Cognition, Consideration of distant future consequences, and Monitor coping style as provided below in Table 6. The data in the Table 6 below is saved in database 114.

**Table 6: Exemplary Dimension Scoring Table**

| User ID | Style Tailoring Dimension | Score |
|---|---|---|
| 1 | High Need for Cognition | 85% |
| 1 | Consideration of distant future consequences | 82% |
| 1 | Monitor coping style | 75% |
| 1 | Prevention Regulatory Focus | 15% |

The search module 126 searches the vector store 120 to find a style preference vector that most closely matches the combination of style tailoring dimensions that have a score above a predefined threshold (e.g., 60%). In this example, as a conversation has developed, the style tailoring dimensions High Need for Cognition, Consideration of distant future consequences, and Monitor coping style have a score above 60% and are all therefore used in searching for a style preference vector in the vector store 120. The blend of High Need for Cognition, Consideration of distant future consequences, and Monitor coping style is plotted as a point in the 3D vector space, representing a vector that is a blend of the three style tailoring dimensions. The search module 126 finds the closest style preference vector to the plotted point in the 3D vector space, and records the coordinate location of the plotted point in the lookup table 118 as representing the most recent and updated style preference vector applicable to the user based on the conversation as a whole.

In step 415, the style tailoring interceptor module 122 enhances an LLM prompt by adding the retrieved updated style preference vector from step 410 to the LLM prompt using a placeholder ($style_preference_vector$) as an example. The enhanced prompt is for example, "You are a call center agent working answering questions from patients. Answer in maximum 5 sentences. You adapt the answer to the patient's preferences: $style_preference_vector$". The $style_preference_vector$ placeholder dynamically inserts the user's preferred communication style (by virtue of the retrieved style preference vector), which is made up of the style tailoring dimension components of Table 6 which met a threshold of 60%. For example, the $style_preference_vector$ will have one or more dimension components (e.g., a blend of the dimension components High Need for Cognition, Consideration of distant future consequences, and Monitor coping style) that are associated with one or more of Analyst, Sensitive, Optimist, and Fighter profiles.

In step 420, the LLM module 128 provides a style tailored response to the user at the client 112 based on the enhanced prompt created with the style preference vector. If $style_preference_vector$ = [Sensitive style tailoring dimension], the LLM module 128 is explicitly instructed to generate responses that are stylistically appropriate in response to an inquiry that bears sensitive style tailoring dimensions (e.g., submissive, pessimistic). For example, the LLM module 128 will respond with empathy and reassurance, acknowledging the user's emotions, avoiding overly technical or impersonal responses and providing gentle guidance rather than forceful instructions. By way of example, the LLM module 128 produces responses that start with empathy (*"I understand you're feeling very tired, even in the morning, which must be frustrating.*")*,* provide generalized, non-intimidating explanations ("*Fatigue can be a complex issue, and it's not always easy to pinpoint the exact cause."*)*,* offer reassurance ("*Try not to worry too much, although I know that can be difficult*.'), and encourage seeking professional help gently ("*To be on the safe side, I would recommend consulting with your doctor about your symptoms."*)*.*

If $style_preference_vector$ = [Analyst style tailoring dimension], the LLM module 128 is explicitly instructed to generate responses that are stylistically appropriate in response to an inquiry that bears analyst style tailoring dimensions (e.g., high need for cognition, consideration of distant future consequences, etc.). For example, the LLM module 128 will respond with logical reasoning and structured responses, providing in-depth, fact-driven explanations, emphasizing scientific accuracy over emotional tone, and breaking down complex topics into clear, data-supported insights. By way of example, the LLM module 128 produces responses that start with a structured explanation, providing a logical breakdown of causes, emphasizing evidence-based reasoning and avoiding emotional reassurance or subjective statements, (*"Persistent fatigue, especially upon waking, can be a sign of various underlying health issues. Common causes include sleep disorders like sleep apnea, chronic conditions such as anemia or thyroid problems, or mental health concerns like depression. Additionally, lifestyle factors such as poor sleep hygiene, lack of physical activity, or an unbalanced diet may contribute to ongoing tiredness."*)*,* and encourage taking informed action based on data, rather than emotional reassurance (*"It's crucial to consult with your healthcare provider for a proper evaluation, as they can conduct tests to rule out serious conditions and provide appropriate treatment recommendations."*)*.*

Taking the example from Table 6, if $style_preference_vector$ = [high need for cognition, consideration of distant future consequences, monitor coping style] vector, the LLM module 128 is explicitly instructed to generate responses that are stylistically appropriate in response to an inquiry that bears analyst style tailoring dimensions "high need for cognition", "consideration of distant future consequences" and "monitor coping style". For example, the LLM module 128 will respond to style tailoring dimensions "high need for cognition", "consideration of distant future consequences", and "monitor coping style" with logical reasoning and structured responses, providing in-depth, fact-driven explanations, emphasizing scientific accuracy over emotional tone, breaking down complex topics into clear, data-supported insights, and evaluating the long-term consequences to support proactive decision-making. With the updates dimension scoring table 116 and style preference vector now accounting for "consideration of distant future consequences" as part of new information from the conversation, the LLM module 128 will incorporate long-term risk evaluation and prevention strategies, aligning with consideration of distant future consequences, by addressing potential long-term health impacts ("*Chronic fatigue can be an early warning sign of long-term health conditions, such as metabolic disorders or cardiovascular risks. Left unaddressed, ongoing sleep deprivation or untreated medical issues may increase the likelihood of developing complications, including insulin resistance, cognitive decline, or hypertension. Implementing preventive strategies now-such as optimizing sleep hygiene, maintaining a nutrient-rich diet, and managing stress-can help mitigate these risks over time.*"). Then, the user replies in step 422. Or alternatively, if the user is satisfied, he may leave the conversation.

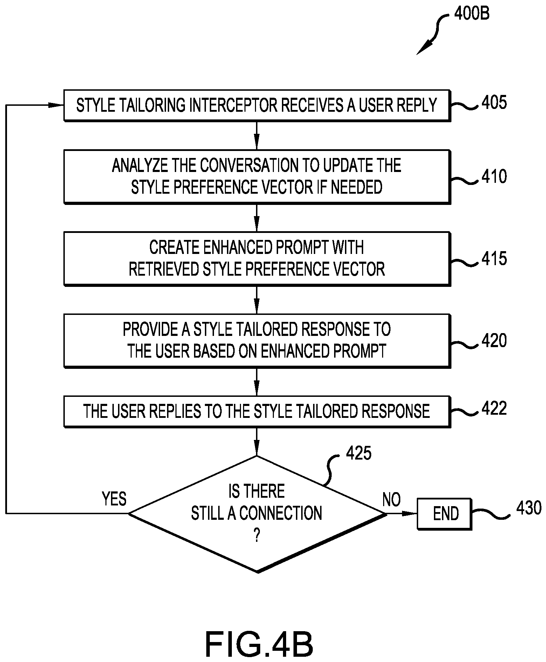

The above-described method 400A can be repeated iteratively and continuously, with the LLM module 128 continuously updating the style preference vector for the user as the style or nature of the inquiry and/or conversation changes. This process can continue to loop until communication between the user through client 112 and the server 102 disconnects, the user stops replying, or similar termination of activity occurs. For example, as shown in Fig. 4B, in a step 425, the server 102 may determine whether the client 112 is still connected to the server 102 to determine if the connection still exists (e.g., by sending network packets, sending a Ping command, sending a question/comment "Are you still there?", or similar). If there is no connection, the method 400B ends in step 430.

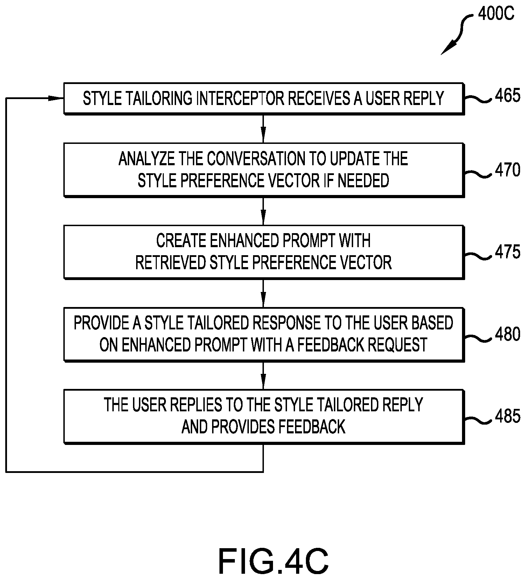

Fig. 4C shows a method 400C as an alternative embodiment to method 400A, including a step 465 where the style tailoring interceptor module 122 receives the user response, a step 470 where the style tailoring interceptor module 122 analyzes the conversation to update the style preference vector if necessary, a step 475 where the style tailoring interceptor module 122 creates an enhanced prompt for the LLM 128, and a step 480 where LLM 128 provides a style tailored response to the user based on the enhanced prompt. However, in this alternative embodiment, the response in step 480 further includes a feedback request, such that when the user receives the response in the continuous feedback loop, the user can provide feedback about the relevance of the style tailored response per step 485. In one representative embodiment, feedback is collected through a thumbs up/thumbs down icon accompanying the style tailored response (e.g., in message form). In one embodiment, only positively rated messages are used for the preference assessment and negatively rated messages are not rated. In one embodiment, detailed feedback may also be requested from the user by asking the user to rate the style tailored response based on the style tailoring dimensions of Table 2. For example, for the Need for Cognition dimension, the user may be asked: "Please indicate what you think of the level of in-depth information provided in the reply/message: far too little, too little, just about right, too much, far too much." Any user feedback can be used to directly change the style preference vector in the lookup table 118 in database 114. Feedback from users can be used as input to refine an AI model. The AI model is trained using a dataset comprising user conversations as training input data entries and corresponding LLM 128 replies as training output data entries. User feedback, such as thumbs-up/thumbs-down ratings or dimension-specific feedback (e.g., perceived depth of explanation for the Need for Cognition dimension), is incorporated as labeled data to improve LLM module 128 response alignment with user style preferences. In one embodiment, a machine-learning algorithm fine-tunes the LLM 128 so that future responses to similar users with matching style preferences are more accurately style tailored. The AI model continuously improves by retraining on feedback-labeled data, ensuring that incorrect style-tailored responses are adjusted over time. Further, if new feedback-based assessments indicate that a style tailored response does not align with user style preference and falls below a predetermined threshold (e.g., 90%), the AI model is modified to reduce similar errors in future responses. These modifications involve fine-tuning the LLM to better recognize and apply style preferences, improving LLM prompt engineering techniques, and refining stored user style preference vectors. This process can be repeated until the error converges and/or confidence levels meet a certain threshold (e.g., 90%), or when additional training otherwise does not improve performance. This continuous training cycle ensures that the AI adapts dynamically, leading to increasingly accurate and personalized responses over time.

Feedback may also be collected implicitly from the behavior of the user, such as by monitoring the user's behavior after the conversation with the LLM module 128. In this example, the LLM module 128 may advise the user to take certain actions (e.g., recording symptoms, using equipment that the LLM module 128 is helping with). The LLM module 128 may be in communication with one or more relevant medical devices or systems that can be used to assess one or more symptoms of the user. By monitoring the user's actions with respect to the medical devices or systems (i.e., general use or more specific analysis as to how the medical device or system is used), through event logs or other information of the medical devices or systems, the style tailoring interceptor module 122 can receive such additional data and further analyze and update the user's style preference vector through the other modules as described herein (e.g., style preference scoring function module 124 and search module 126). The behavioral data can also be collected for inferentially driving AI models through inferences that the previously identified style preference vector is correct or accurate, and refining AI models from feedback as previously described above.

Without the above, an AI communication system such as an AI chatbot would produce generic responses to conversations that do not align with the user's psychological or communication preferences. The modules, configurations, and operations described above ensure that users receive responses in a format they feel comfortable with. The LLM module 128 adjusts its language and tone dynamically for different users, and the system 100 personalizes AI-generated responses for a better user experience as exemplified above. Furthermore, the AI communication system or AI chatbot can make changes to the psychological or communication preferences on an ongoing iterative basis as aspects of the conversation change and/or the AI communication system or AI chatbot learns new information.

While the above example showed the result of factoring "consideration of distant future consequences" into a reply based on conversation, it is also possible that a change may occur in the conversation in which a prior style tailoring dimension is subtracted or removed from the style preference vector. Thus, in an alternative embodiment, if it is assumed that instead of adding "consideration of distant future consequences" according to the scoring in Table 6, "monitor coping style" is removed, then the following responses from the LLM module 128 will no longer account for "monitor coping style".

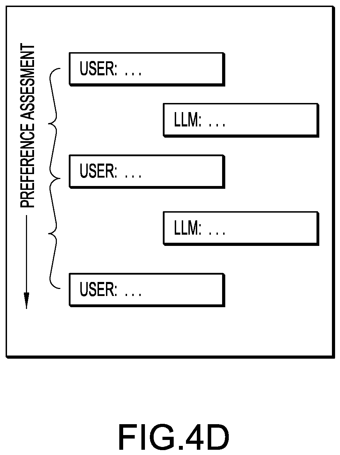

Fig. 4D shows an exemplary illustration of a continuous conversation between a user and the LLM 128 such that a style preference assessment is continuously performed as the conversation progresses, wherein the LLM module 128 continuously updates the style preference vector for the user as the style or nature of the inquiry and/or conversation changes, as shown in method 400A. Fig. 4D also illustrates a representative embodiment of an AI communication system that can be used by an AI chatbot to communicate with a user, as well as an example of a user interface between a user and an AI chatbot using LLM module 128.

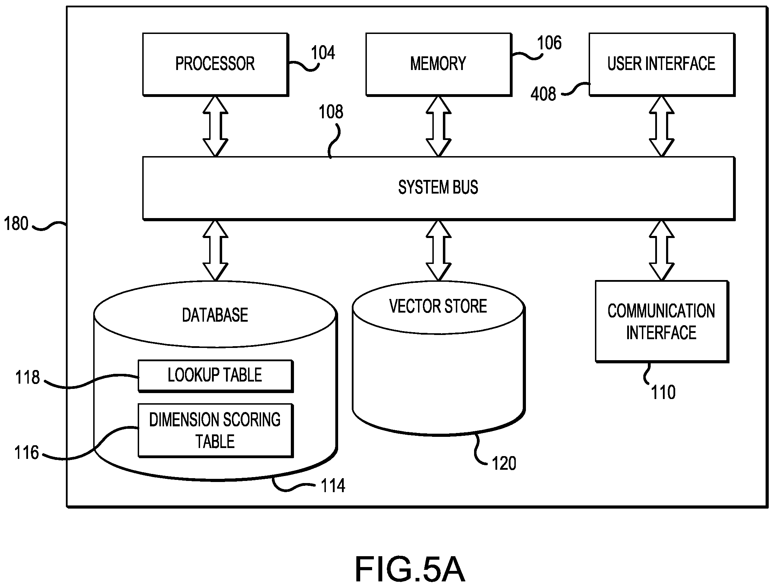

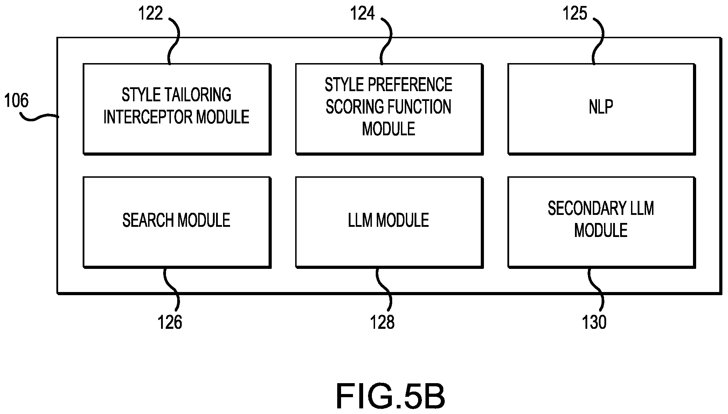

In an alternative embodiment shown in Figs 5A-5B, all of the components of the server 102 of the embodiment shown in Figs. 1A-1B are integrated into a client 180. As storage space increases in devices such as mobile phones, tablets, laptops, and desktop computers, large databases and LLMs may be stored on such devices. Thus, in this embodiment, the LLM module 128 and all of the other modules and components can be stored and/or downloaded from a network to the client 180 via communication interface 110. The embodiment does not change the configuration and operations described above in connection with Fig. 1A other than communication occurs between the user of the client 180 and the LLM module 128 via the system bus 108 without a need for network communication, wherein the user of the client 180 can communicate with the LLM 128 via user interface 408 which can be a mobile device, mobile smartphone or tablet computer touchscreen, desktop keyboard and mouse, or laptop keyboard and trackpad.

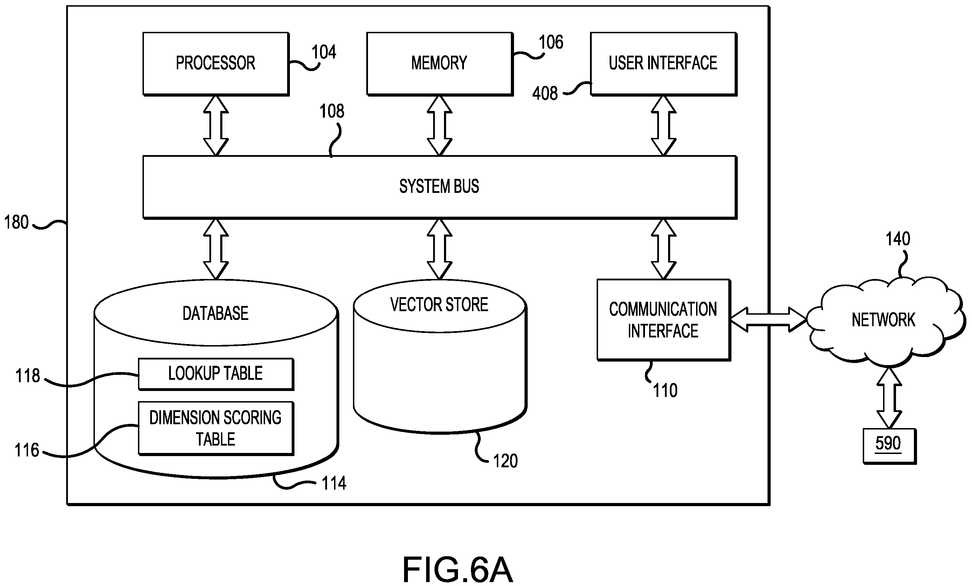

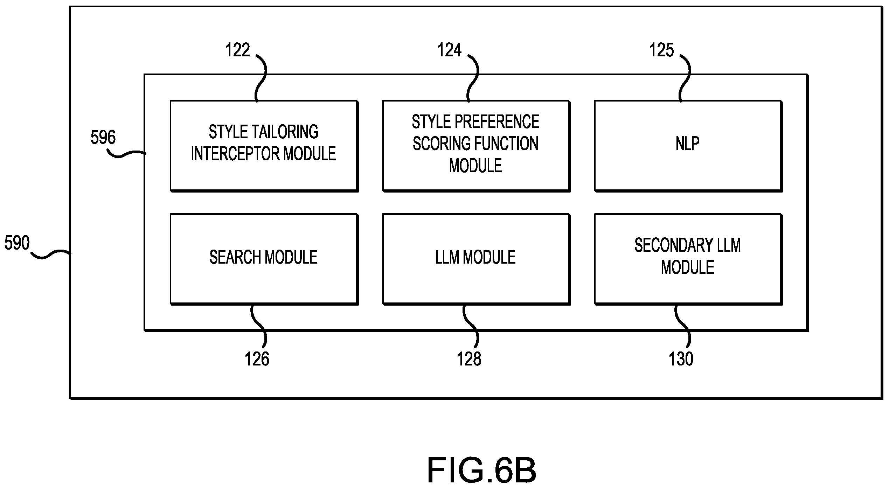

In a further alternative embodiment shown in Figs 6A-6B, modules 122, 124, 125, 126, 128, and 130 of the embodiment shown in Figs. 5A-5B above are used or accessed from the cloud as part of a Software-as-a-Service (SaaS) infrastructure 590 or similar where one or more of the modules 122, 124, 125, 126, 128, and 130 can be used or accessed on demand from memory 596. In an alternative embodiment not depicted, it is also readily apparent that any one of the database 114 and vector store 120 may be also be accessed over network 140 from a cloud-based SaaS 590.

The illustrations of the embodiments described herein are intended to provide a general understanding of the structure of the various embodiments. The illustrations are not intended to serve as a complete description of all of the elements and features of the disclosure described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the Figures are to be regarded as illustrative rather than restrictive. One or more embodiments of the disclosure may be referred to herein, individually and/or collectively, by the term "invention" merely for convenience and without intending to voluntarily limit the scope of this application to any particular invention or inventive concept. Although specific embodiments have been illustrated and described herein, it should be appreciated that any subsequent arrangement designed to achieve the same or similar purpose may be substituted for the specific embodiments shown. For example, while some of the embodiments have been described in connection with different modules (e.g., 122, 124, 125, 126, 128, 130) for supporting different functions, it is appreciated that a single module, or a different combination of the modules, could carry out all the functions described in the related method. The term "module" simply refers to a specific instruction, or set of instructions, or one or more programs with instructions, executed by the processor 104 to perform a function, e.g., analysis. As another example, the drawings show database 114 and vector 120 as separate from memory 106; however, it is appreciated that such databases of information can also be stored in memory 106, or in a similar memory device. While an LLM module 128 is illustrated, it is appreciated that other forms of suitable AI models may be used, especially in view of the explosive growth of AI, and that LLMs may be replaced with similar types of models. AI chatbots are for example communication systems and user interfaces that can use the present system and modules to carry out the functions described herein. This disclosure is intended to cover any and all subsequent adaptations or variations of various embodiments. Combinations of the above embodiments, and other embodiments not specifically described herein, will be apparent to those of skill in the art upon reviewing the description.

Memory 106 may store instructions used to implement some, or all aspects of methods and processes described herein. Memories described herein are tangible storage mediums for storing data and executable software instructions and are non-transitory during the time software instructions are stored therein. As used herein, the term "non-transitory" is to be interpreted not as an eternal characteristic of a state, but as a characteristic of a state that will last for a period. The term "non-transitory" specifically disavows fleeting characteristics such as characteristics of a carrier wave or signal or other forms that exist only transitorily in any place at any time. The memory 106 is an article of manufacture and/or machine components. The memory 106 is a computer-readable medium from which data and executable software instructions can be read by a computer (e.g., the processor 104. Memory 106 may be implemented as one or more of random access memory (RAM), read only memory (ROM), registers, and register files, flash memory, electrically programmable read only memory (EPROM), electrically erasable programmable read-only memory (EEPROM), registers, a hard disk, a removable disk, tape, compact disk read only memory (CD-ROM), digital versatile disk (DVD), floppy disk, Blu-ray disk, or any other form of storage medium known in the art. Memory 106 may be volatile or non-volatile, secure and/or encrypted, unsecure and/or unencrypted. Memory 106 is any memory which is directly accessible to a processor. References to "computer memory" or "memory" should be interpreted as possibly being multiple memories. The memory may for instance be multiple memories within the same computer system. The memory may also be multiple memories distributed amongst multiple computer systems or computing devices. The aforementioned aspects of memory or memory 106 apply to any other memory disclosed in the present application (e.g., memory 596).

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

The preceding description of the disclosed embodiments is provided to enable any person skilled in the art to practice the concepts described in the present disclosure. The above disclosed subject matter is considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure is to be determined by the broadest permissible interpretation of the following claims and their equivalents and shall not be restricted or limited by the foregoing detailed description.

## Claims

1. A method (300) for providing a style tailored response to a user comprising processor-executed functions of,
receiving (305) an inquiry from a user,
analyzing (310) the inquiry to determine a style profile associated with the user, generating (330) an enhanced prompt by incorporating the style profile into a prompt for an artificial intelligence (AI) model (128) to define style-tailoring requirements for a response to the user,
transmitting the enhanced prompt to the AI model (128),
transmitting (335) a style-tailored response to the user from the AI model (128) based on the enhanced prompt.

2. The method (300) according to claim 1, wherein the style profile is based on a style preference vector and comprises one or more style tailoring dimensions.

3. The method (300) according to claim 2, wherein the style preference vector is updated after each interaction with a user in a continuing conversation by adding or subtracting style tailoring dimensions extracted from the continuing conversation.

4. The method (300) according to any one of claims 2 or 3, wherein a style preference scoring function (124) is configured to prompt the AI model (128) to score style tailoring dimension candidates based on the inquiry for updating the style profile and the AI model (128) is used in an AI chatbot.

5. The method (300) according to any one of claims 1, 2, 3, or 4 wherein the AI model (128) is a large language model (LLM), a machine learning model, or a machine learning classifier.

6. The method (300) according to any one of claims 2, 3, 4, or 5, wherein the style preference vectors are organized in a multi-dimensional vector space.

7. The method (300) according to any one of claims 1, 2, 3, 4, 5, or 6, wherein the inquiry is analyzed for linguistic and structural style indicators by natural language processing.

8. A system (100) for providing a style tailored response to a user comprising:
a processor (104) and memory (106),
a style tailoring interceptor module (122) for analyzing (310), via the processor (104), an inquiry from a user to determine a style profile associated with the user and generating (330) an enhanced prompt by incorporating the style profile into a prompt, and
an artificial intelligence (AI) model (128) for defining style-tailoring requirements for a response to the user based on the enhanced prompt,
wherein the AI model (128) uses the processor (104) to determine and transmit (335) a style-tailored response to the user from the based on the enhanced prompt.

9. The system (100) according to claim 8, wherein the style profile is based on a style preference vector and comprises one or more style tailoring dimensions.

10. The system (100) according to claim 9, wherein the style preference vector is updated after each interaction with a user in a continuing conversation by adding or subtracting style tailoring dimensions extracted from the continuing conversation.

11. The system (300) according to any one of claims 8, 9, or 10 wherein the AI model (128) is a large language model (LLM), a machine learning model, or a machine learning classifier.

12. The system (100) according to any one of claims 9, 10, or 11 wherein the style preference vectors are organized in a multi-dimensional vector space.

13. The system (100) according to any one of claims 8, 9, 10, 11, or 12, wherein the inquiry is analyzed for linguistic and structural style indicators by a natural language processing module.

14. The system (100) according to any one of claims 8, 9, 10, 11, 12, or 13, wherein the style tailoring interceptor module (122) or the AI model (128) are stored and accessed from a mobile device or a software-as-a-service (SaaS).

15. A non-transitory medium (106) comprising computer-readable instructions that when executed by a processor (104), cause the processor (104) to carry out steps of:
receiving (305) an inquiry from a user,
analyzing (310) the inquiry to determine a style profile associated with the user,
generating (330) an enhanced prompt by incorporating the style profile into a prompt for an artificial intelligence (AI) model (128) to define style-tailoring requirements for a response to the user,
transmitting the enhanced prompt to the AI model (128),
transmitting (335) a style-tailored response to the user from the AI model (128) based on the enhanced prompt.
